Europäisches Patentamt

European Patent Office

Office européen des brevets

(11) Publication number: **0 343 942**
**A2**

(12) **EUROPEAN PATENT APPLICATION**

(21) Application number: **89305227.4**

(51) Int. Cl.⁴: **F 16 B 7/18**

(22) Date of filing: **23.05.89**

(30) Priority: **24.05.88 ZA 883676    24.05.88 ZA 883677**

(43) Date of publication of application:
**29.11.89 Bulletin 89/48**

(84) Designated Contracting States:
**AT BE DE ES FR GB GR IT NL**

(71) Applicant: **Ege, Eugen**
**P.O. Box 10180**
**Scottsville Natal 3209 (ZA)**

(72) Inventor: **Ege, Eugen**
**P.O. Box 10180**
**Scottsville Natal 3209 (ZA)**

(74) Representative: **Livesley, John Ronald**
**J.R. Livesley & C0. 6 Pinehurst Road**
**Liverpool L4 2TY (GB)**

The application is published incomplete as filed (Article 93 (2) EPC). The point in the description or the claim(s) at which the omission obviously occurs has been left blank.
A request for addition of Fig. 12 and 13 has been filed pursuant to Rule 88 EPC. A decision on the request will be taken during the proceedings before the Examining Division (Guidelines for Examination in the EPO, A-V, 2.2).

(54) **Fastening means for constructional elements such as extrusions.**

(57) Channel extrusions are joined by fasteners having spaced apart formations joined by a shank; the first formation may be turned by a tool such as a an Allen key and the second formation is of parallelogram shape and turns inside the channel after being inserted into it for the angled sides to abut the walls of the channel, rotation of the first formation causing the parallelogram to be tightened in this position. Frames comprising the extrusions joined in this manner are used for supporting sitting surfaces for a fold-up stand.

FIG 1

**Description**

## FASTENING MEANS FOR CONSTRUCTIONAL ELEMENTS SUCH AS EXTRUSIONS

This invention relates to fastening means for extrusions, particularly of the type comprising aluminium which includes a number of longitudinal channels.

Many arrangements have been proposed to couple other channel members such as extrusions, or bracket units or other formations, to the extrusions but as far as the Applicant is aware none are as simple and es efficient as the arrangement now proposed.

According to the invention a fastener for joining constructional elements at least one of which has a lipped channel, includes two spaced apart formations joined by a shank, the first formation including means for receiving a tool and the second formation having an elongated shape, the width being less and the length being greater than the width of the entrance of the lipped channel; the second formation being rotatable in the channel after insertion thereinto for anchorage behind the lips, the first formation being able to be actuated by the tool for the two formations to be drawn together for tightening the second formation in the channel.

In a preferred form of the invention the second formation is a parallelogram, the dimensions thereof being chosen for the short sides to abut the internal sides of the channel. A step may be formed adjacent to the short sides to engage with the lip of the channel. An extremely efficient locking result is obtained.

The first formation may be a bolt head and the shank is the shank of the bolt. The shank passes through a screw-threaded square-to-round insert and then in a screw-threaded orifice of the parallelogram second formation.

In another form of the invention a friction tube is provided on the shank and this tube is preferably deformable so that when the first formation is tightened the tube deforms to fill the space between the two formations and acts as a locking device when compressed.

The first formation may include a socket to receive an Allen key. If a second extrusion is to be joined to a first extrusion an orifice may be provided for access of an Allen key to the socket.

A particular application of the invention relates to fold up stands for sports stadiums and the like, for example concert hall and other places where crowds of seated persons are required to be accommodated. In particular the invention relates to fold up stands for indoor stadiums.

A fold up stand according to this aspect of the invention includes a plurality of frames incorporating channel sections constructed from constructional elements joined together with fasteners as described above, the frames supporting sitting surfaces, the frames being arranged stepwise and which are slidable between such stepwise arrangement and a second arrangement in which they are in the same vertical place as their immediate neighbour or neighbours, adjacent frames being connected by concertina formations and adjacent frames being slidable with relation to each other in sympathy with the concertina movement of the formations.

The concertina formations may take the form of lazy tongs which generally comprises struts pivotally joined for movement between a fully extended and a fully folded position.

The concertina formations arrangement should include an over-centre facility to prevent fold up of the arrangement when not required.

In one form of the invention adjacent frames have downwardly-depending columns and concertina arrangements are located in stepwise relationship towards the higher end of the assembly.

The concertina arrangements may include a vertical post connected to the two columns by pivoted and articulated struts so that the adjacent columns are moved towards each other for folding purposes by raising the central post. The columns may be rollers, wheels or the like to facilitate movement. Such rollers or wheels may be spring-loaded so that they are raised clear of the floor when people are sitting on the stand.

It will be appreciated that for wide stands, each seat will have a number of transverse frames or a continuous transverse frame and a number of concertina arrangements are provided across the width. At least the lower pivot points should be joined so that raising or lowering of the end posts results in the movement of all the columns associated with each seating surface.

Handrails may be provided and these may also serve to brace the stand when in the extended position.

Braking means may be provided at the corners of the extended stand to prevent undesired slippage.

An embodiment of the invention is described below with reference to the accompanying drawings, in which:

Figure 1 is a side view, partly in section, of two forms of fasteners according to the invention;

Figure 2 is a plan view of a portion of a channel of a constructional element and showing the location of the second formation;

Figure 3 illustrates a typical construction using constructional elements and fasteners according to the invention,

Figure 4 is an isometric view of a fold-up stand according to the invention in its extended position;

Figure 5 is an side view of the stand in its folded position;

Figure 6 is an partial side view in detail of the arrangement in the extended positioon;

Figure 7 is an isometric view in detail of the arrangement of the frames for the sitting surfaces

Figure 8 is a detail view of a portion of Figure 7 showing the extrusions with a sliding member;

Figure 9 is a sectional side view of a slider;

Figure 10 is a sectional side view illustrating the sliding arrangement;

Figure 11 is a side view of the over-centre arrangement;

Figure 12 is a front view of the bottom of a column showing a wheel;

Figure 13 is a section on the line 13 - 13 of Figure 12;

Figure 14 is an isometric view of an alternative form of the invention in its extended position;

Figure 15 is an isometric view of an alternative form of the invention in its folded position, and

Figure 16 is a side view showing details of the lazy tong arrangement.

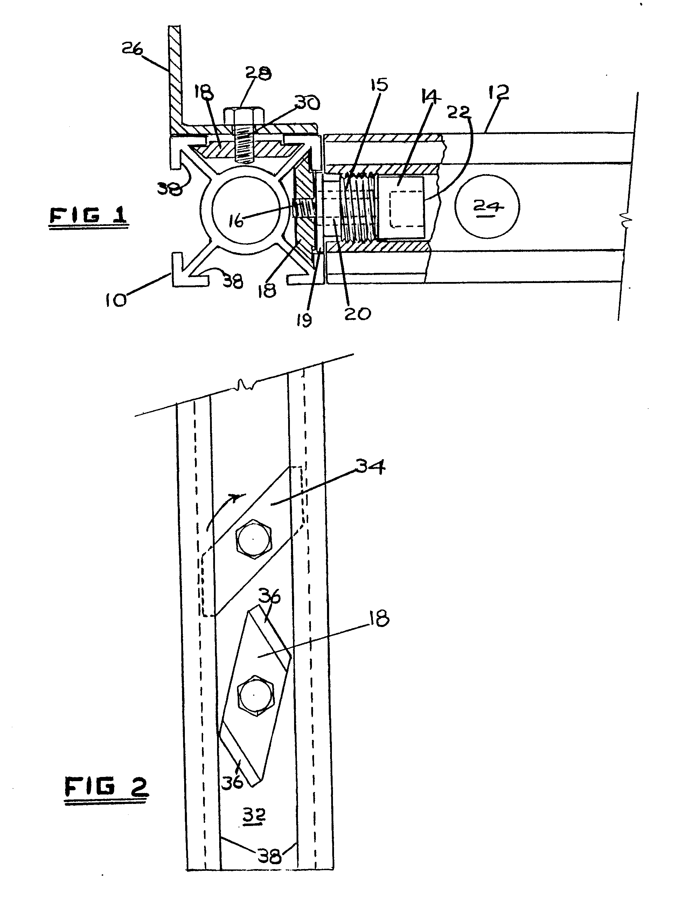

Referring first to Figure 1, an extrusion 10 is joined to an extrusion 12 at right angles, by means of a fastener comprising a first formation 14 integral with screwed shank 16 designed to engage with a second formation 18. The first formation 14 includes a socket 22 for receiving an Allen key so that the two formations can be drawn together by tightening with an Allen key, an orifice 24 being provided for insertion thereof.

The formation 14 is retained with a square-to-round insert 15 by means of a compressible bush 20 (shown dotted). This bush functions as a retainer, friction tube and spacer to maintain the desired engagement distance. The square-to-round insert 15 is screwed into the threaded end of the extrusion 12 and glued firmly in position. The square end 19 of the insert fits into the slot of the extrusion 10 thus preventing the extrusion 12 from rotating and possibly disengaging the second formation 18.

In addition an angle bracket 26 is joined to the extrusion 10 by a simple bolt comprising a head 28 and shank 30 engaging with the formation 18 which may be the same as the other formation 18. A spanner is all that is needed to tighten the assembly.

Turning to Figure 2, the second formation 18 enters the channel 32 by virtue of the its parallelogram shape. It is then turned as shown by position 34 when the short sides abut almost exactly the internal walls of the channel. Steps 36 are provided which engage behind the lips 38 of the channels to complete a very efficient locking.

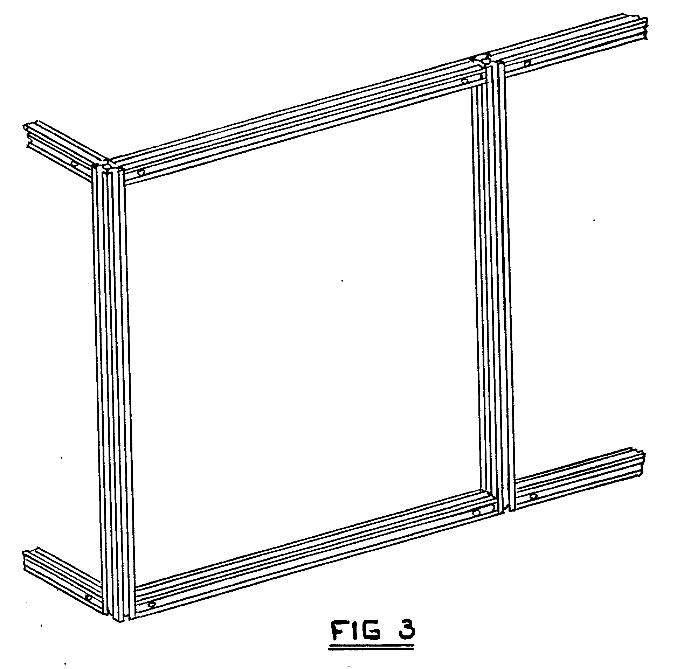

Figure 3 shows a portion of a completed framework incorporating the invention and a particularly useful application of frameworks according to the invention involving fold-up stands for crowd seating.

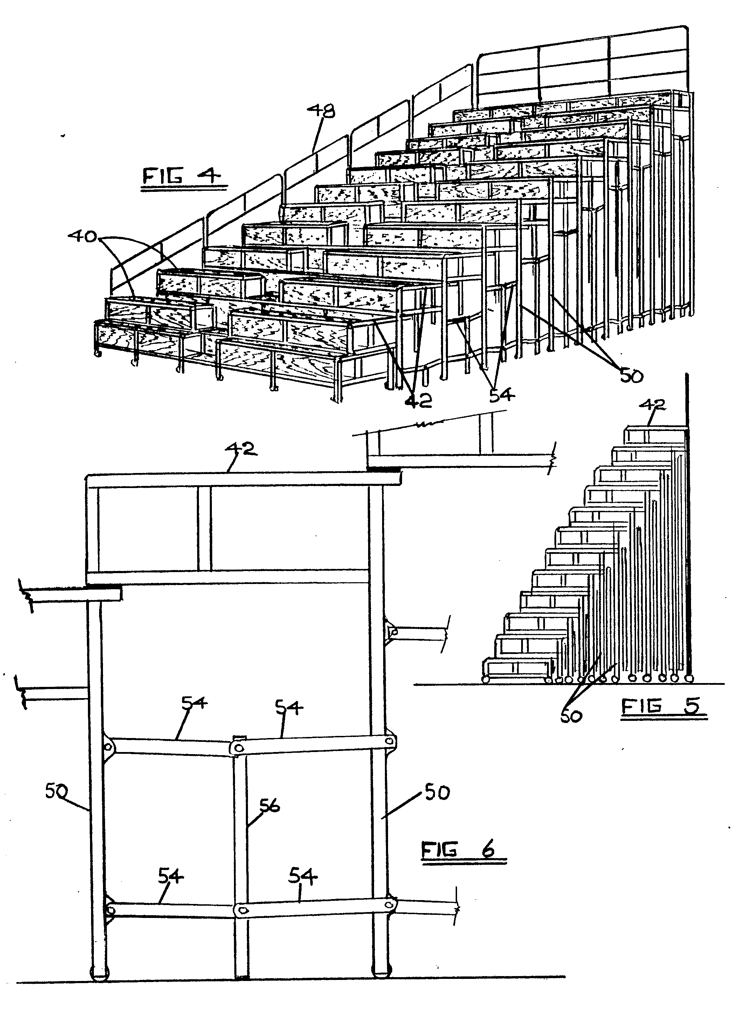

Figures 4 and 5 show a fold-up stand in the extended (Figure 4) and folded (Figure 5) positions.

The seating surfaces 40 are supported on frames 42 which are constructed as in Figure 3 and these slide over their adjacent neighbours for the extending and folding operations.

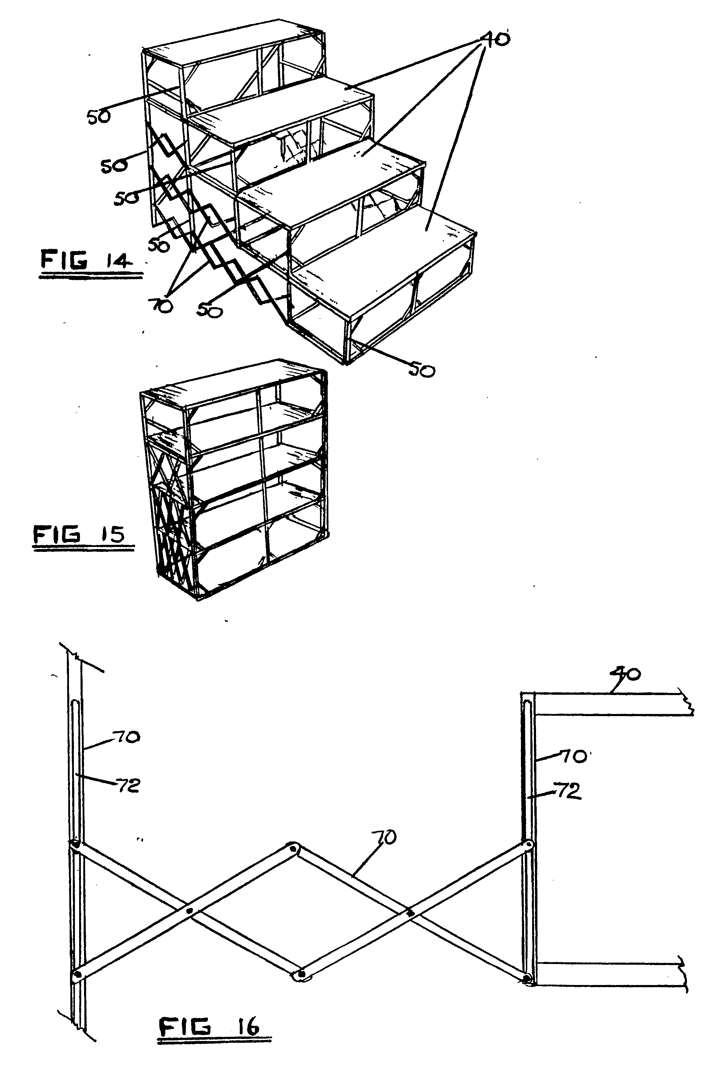

Concertina formations shown generally by references 54 maintain the frames at their pre-determined lengths of travel in the extended position and these are over-centre in the extended position as is shown in Figure 4 but which is shown in greater detail in Figures 6 and 11.

Handrails 48, shown on one side only but which may be mounted on both sides if required, are located in orifices in adjacent frames and these impart even greater stability to the extended stand. When required to fold up the stand the handrails 48 are merely removed and stacked.

The fold-up position (Figure 5) is easy to be stacked out of the way.

The frames 42 are supported on columns 50 which are connected by concertina arrangements 54 shown in greater detail in Figures 6 and 11. In Figure 6 and 11, the concertina arrangements comprise articulated levers 54 joined to a central vertically-movable member 56, which, when raised causes the articulated levers 54 to close, thereby folding the adjacent columns 50. When forced downwards, the members 56 cause the levers 54 to straighten and then to snap over-centre. The lower ends of the members 56 rest on the floor thereby further improving the stability of the extended position.

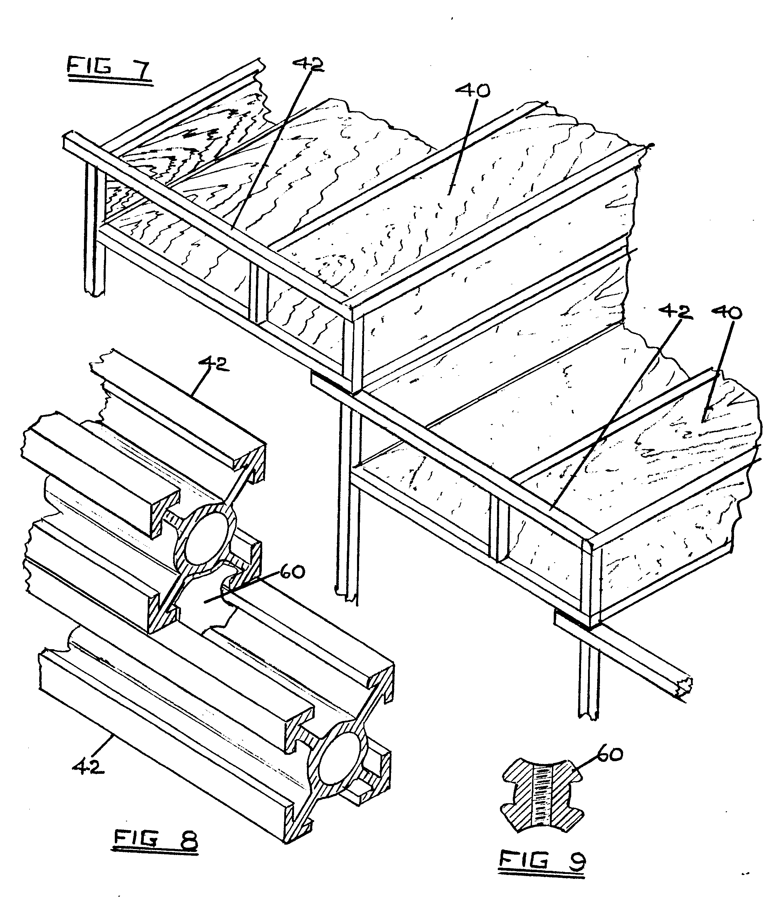

The adjacent frames 42 slide over each other when moving from the extended to the folded-up positions and vice versa. This is achieved by the provision of a slider 60 (Figure 9) shown in position in Figure 8. This slider 60 is preferably of nylon or other frictionless material. It is held in position by means of a bolt (not shown) engaging in its threaded axial orifice, the fastening being achieved as described above in relation to Figures 1 and 2.

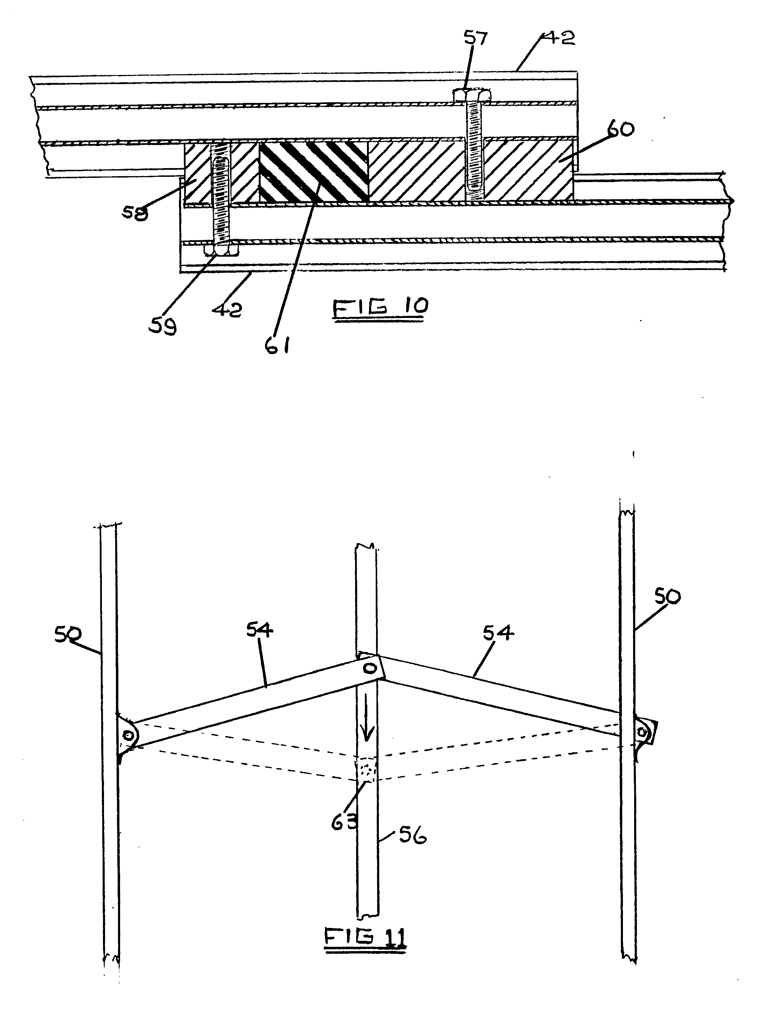

Referring to Figures 10 and 11, two frames 42 are shown in a captive sliding relationship where the slide 60 is secured to the upper frame by means of a bolt 57 and a stop-end 58 is secured to the lower frame by means of bolt 59.

A rubber buffer 61 is located between the slide and the stop-end and is designed to provide a resilient restraint on the folding arms 54 when residing in the over-centre position 63 shown in broken lines, when the downward movement is stopped with the lower end of the vertically-movable member 56 coming into contact with the floor.

In operation of this device, the rubber buffer will be compressed with the last downward movement of the arm 54 as illustrated by the arrow in Figure 11, and when these arms have reached the over-centre position the expansion of the rubber bush will then tend to restrain the arms in the desired position.

To facilitate the extending and folding of the stand, the columns may be provided with wheels or castors 62 (Figure 12). These are spring mounted, as shown in Figure 13 and this spring 64 is chosen so that it is depressed when a few people are on the stand. This ensures that the columns do not stray when there are people on the stand.

In Figures 14 and 15 an alternative arrangement is shown in which the concertina arrangement takes the form of a lazy tong system as indicated by reference 70. The ends of the lazy tongs 70 slide in channels 72 in the columns 50 thus allowing the seats 40 to be extended as in Figure 14 or folded away as in Figure 15.

Claims

1. A fastener for joining constructional elements at least one of which has a lipped channel, including two spaced apart formations joinable by a shank, the first formation including means for receiving a tool and the second formation having an elongated shape, the width being less and the length being greater than the width of the entrance of the channel; the second formation being rotatable in this channel after insertion thereinto for anchorage behind the lips, the first formation being able to be actuated by the tool to draw the two formations together.

2. The fastener according to claim 1 in which the second formation is a parallelogram, the dimensions of which are chosen for the short sides to abut the internal sides of the channel.

3. The fastener according to claim 2 including a step adjacent to the short sides for engagement with the lip of the channel.

4. The fastener according to any of the above claims in which the first formation is a bolt head and the shank is the shank of the bolt.

5. The fastener according to claim 4 in which the shank passes through a screw-threaded square-to-round insert and then in a screw-threaded orifice of the parallelogram second formation.

6. The fastener according to claim 4 in which a deformable friction tube is located on the shank.

7. A fold-up stand comprising a plurality of frames incorporating channel sections joined by fasteners according to any of the above claims, the frames supporting sitting surfaces, the frames being arranged stepwise and being slidable between such stepwise arrangement and a second arrangement in which they are in the same vertical plane as their neighbour or neighbours, adjacent frames being connected by concertina formations, adjacent frames being slidable with relation to each other in sympathy with the concertina movement of the formations.

8. The fold up stand according to claim 7 in which adjacent frames have downwardly-depending columns and the concertina arrangements are located in stepwise relationship towards the higher end of the assembly.

9. The fold up stand according to either of claims 7 or 8 in which the concertina arrangements include vertical movable members connected to articulated levers which pivot on the columns.

10. The fold up stand according to claim 7 or claim 8 in which the concertina formations are in the form of lazy tongs.

11. The fold up stand according to any of the above claims 7 to 10 in which the columns have spring loaded wheels or rollers, the spring action being chosen to be overcome by the mass of a few people sitting on the extended stand.

12. A fold up stand substantially as described with reference to Figures 1 to 13.

13. A fold up stand substantially as described with reference to Figures 14 to 16.

14. A fastening for structural elements substantially as described with reference to Figures 1 - 3.

FIG 1

FIG 2

FIG 3

FIG 4

FIG 5

FIG 6

FIG 7

FIG 8

FIG 9

FIG 10

FIG 11

FIG 14

FIG 15

FIG 16